# EUROPÄISCHE PATENTANMELDUNG

(11) **EP 1 902 927 A2**
(43) Veröffentlichungstag der Anmeldung: **26.03.2008**
(21) Anmeldenummer: 07008995.8
(22) Anmeldetag: 04.05.2007
(51) Int. Cl.: B62D 21/15, B62D 25/08

(54) **Kraftfahrzeugkarosserie für ein Kraftfahrzeug**

(30) Priorität: 02.06.2006 DE 102006025856
(71) Anmelder: GM Global Technology Operations, Inc., Detroit, MI 48265-3000 (US)
(72) Erfinder: Braunbeck, Bardo, 55276 oPPENHEIM (DE); Hock, Theobald, 63762 Grossostheim (DE)
(74) Vertreter: Hebing, Norbert

(57) **Zusammenfassung**

Eine Kraftfahrzeugkarosserie (1) für ein Kraftfahrzeug mit einem Längsträger (2) und mit einer in den Längsträger (2) eingeführten Crashbox (4) ist im von dem Längsträger (2) getrennten Zustand schmaler als zwei einander gegenüberstehende Wandungen (7, 7') des Längsträgers (2). Hierdurch lässt sich die Crashbox (4) einfach in den Längsträger (2) einführen. Nach der Montage sind seitliche Schalenteile (8, 8') der Crashbox (4) gegen die Wandungen (7, 7') des Längsträgers (2) vorgespannt. Hierdurch ist die Crashbox (4) fest mit dem Längsträger (2) verbunden.

## Beschreibung

Die Erfindung betrifft eine Kraftfahrzeugkarosserie für ein Kraftfahrzeug mit einem Längsträger und mit einer in einem in oder gegen die Fahrtrichtung weisenden Ende des Längsträgers eingeführten und zwischen zwei gegenüberstehenden Wandungen des Längsträgers befestigten Crashbox.

Solche Kraftfahrzeugkarosserien werden bei heutigen Kraftfahrzeugen häufig eingesetzt und sind aus der Praxis bekannt. Die Crashbox dient bei einem Frontalaufprall oder Heckaufprall des Kraftfahrzeuges zum Abbau der Aufprallenergie. Die Einführung der Crashbox in das offene, in Fahrtrichtung weisende Ende des Längsträgers ermöglicht eine gleichmäßige Einleitung von Kräften in den Längsträger. Nachteilig hierbei ist jedoch, dass zwischen dem Längsträger und der Crashbox Toleranzen entstehen. Zum Ausgleich der Toleranzen muss zwischen der Crashbox und den Wandungen des Längsträgers ein Spalt vorgesehen werden. Um jedoch die vorgesehene Funktion der Crashbox zu gewährleisten, ist eine kraftschlüssige und/oder formschlüssige Verbindung mit den gegenüberstehenden Wandungen des Längsträgers erforderlich.

Man könnte daran denken, die beiden gegenüberstehenden Wandungen des Längsträgers nachgiebig zu gestalten und bei der Montage der Crashbox zu verformen. Der Längsträger ist sehr steif und zudem meist mit Verstärkungsblechen versehen, so dass eine ausreichende Verformung des in Fahrtrichtung weisenden Endes des Längsträgers nicht sichergestellt werden kann.

Weiterhin könnte man daran denken, dass durchgehende Schrauben quer zur Längsträgerachse durch das Ende des Längsträgers und die Crashbox geführt und damit der Längsträger und die Crashbox verschraubt werden. Dies hat jedoch den Nachteil, dass die Wandungen des Längsträgers genau parallel zueinander angeordnet sein müssen.

Der Erfindung liegt das Problem zugrunde, eine Kraftfahrzeugkarosserie der eingangs genannten Art so weiterzubilden, dass sie eine einfache Montage der Crashbox ermöglicht.

Dieses Problem wird erfindungsgemäß dadurch gelöst, dass die Crashbox im von dem Längsträger getrennten Zustand schmaler ist als der Abstand der beiden Wandungen des Längsträgers, dass die Crashbox in ihrem in den Längsträger eindringenden Ende in Richtung der Wandungen des Längsträgers verformbar ist und dass die Crashbox seitlich gegen die Wandungen des Längsträgers vorgespannt ist.

Durch diese Gestaltung lässt sich zwischen den sich gegenüberstehenden Wandungen des Längsträges und der Crashbox ein Spalt zum Ausgleich der Toleranzen vorsehen. Dies führt dazu, dass sich die Crashbox zur Montage einfach in das in Fahrtrichtung weisende Ende des Längsträgers einführen lässt. Anschließend wird die Crashbox seitlich gegen die Wandungen des Längsträgers vorgespannt und ist damit kraftschlüssig und/oder formschlüssig mit dem Längsträger verbunden. Bei der Vorspannung der Crashbox gegen die Wandungen des Längsträgers wird die Crashbox verformt. Der Längsträger kann daher besonders steif ausgeführt und mit Verstärkungselementen versehen werden. Hierdurch lässt sich die erfindungsgemäße Kraftfahrzeugkarosserie in Fahrtrichtung gesehen hinter der Crashbox mit einer vorgesehenen Steifigkeit gestalten. Dank der Erfindung können die Wandungen des Längsträgers auch nicht parallel zueinander angeordnet sein.

Die Vorspannung der Crashbox gegen die Wandungen des Längsträgers gestaltet sich gemäß einer vorteilhaften weiterbildung der Erfindung besonders einfach, wenn die Crashbox zumindest zwei beweglich zueinander angeordnete Crashboxteile aufweist und wenn eines der Crashboxteile an der einen Wandung und das andere der Crashboxteile an der gegenüberstehenden Wandung des Längsträges befestigt ist.

Die Verbindung der Crashbox mit dem Längsträger weist gemäß einer anderen vorteilhaften Weiterbildung der Erfindung eine besonders hohe Stabilität auf, wenn die Crashbox zumindest zwei Verstärkungselemente aufweist und wenn Befestigungselemente jeweils ein Verstärkungselement mit der nächsten wandung des Längsträgers verbinden.

Die Crashbox ist gemäß einer anderen vorteilhaften weiterbildung der Erfindung konstruktiv besonders einfach aufgebaut, wenn jeweils zumindest ein Crashboxteil einem der Verstärkungselemente zugeordnet ist.

Die Crashbox weist gemäß einer anderen vorteilhaften weiterbildung der Erfindung vor der Montage eine hohe Stabilität auf, wenn die Crashboxteile jeweils mit einem der verstärkungselemente vorfixiert sind. Damit lässt sich die Crashbox mit den Verstärkungselementen einfach in den Längsträger einführen. Die Vorfixierung der Bauteile ermöglicht eine Transportsicherung vor der Montage.

Die erfindungsgemäße Kraftfahrzeugkarosserie gestaltet sich konstruktiv besonders einfach, wenn die Crashboxteile zwischen einem der Verstärkungselemente und einer der Wandungen des Längsträgers eingespannt sind.

Eine vorgesehene Stabilität der Crashbox lässt sich gemäß einer anderen vorteilhaften weiterbildung der Erfindung einfach erreichen, wenn die Crashboxteile oder Schalenteile der Crashbox zumindest außerhalb des Längsträgers über ein Wandelement der Crashbox verbunden sind. Damit hat die Crashbox außerhalb des Einsteckbereichs in den Längsträger ein geschlossenes Profil.

Innerhalb des Längsträgers lässt sich die Crashbox einfach aufbiegen und mit den seitlichen Begrenzungen gegen die Wandungen des Längsträgers vorspannen, wenn das die Crashboxteile verbindende Wandelement innerhalb des Längsträgers geschlitzt ist. vorzugsweise befindet sich am Ende eines Schlitzes des Wandelementes eine Bohrung zur Reduzierung der Spannungen der Crashbox.

Die Crashbox gestaltet sich gemäß einer anderen vorteilhaften Weiterbildung der Erfindung konstruktiv besonders einfach, wenn die Crashbox zwei Schalenteile zur Aufnahme jeweils eines der Crashboxteile aufweist und wenn die Schalenteile ausschließlich außerhalb des Längsträgers miteinander verbunden sind.

Eine elastische Verformbarkeit der die Crashboxteile oder die Schalenteile verbindenden Wandung gestaltet sich gemäß einer anderen vorteilhaften Weiterbildung der Erfindung konstruktiv besonders einfach, wenn das die Crashboxteile oder die Schalenteile verbindende Wandelement der Crashbox im von dem Längsträger getrennten Zustand gewölbt ist.

Zur weiteren Vereinfachung der Verformbarkeit der Crashbox bei der Vorspannung gegen die Wandungen des Längsträgers trägt es gemäß einer anderen vorteilhaften weiterbildung der Erfindung bei, wenn das die Crashboxteile oder die Schalenteile verbindende wandelement der Crashbox verformbare Verprägungen aufweist.

Das die Crashboxteile oder die Schalenteile miteinander verbindende Wandelement der Crashbox lässt sich gemäß einer anderen vorteilhaften weiterbildung der Erfindung einfach bei der Vorspannung gegen die wandung des Längsträgers dehnen, wenn das die Crashboxteile oder die Schalenteile verbindende Wandelement aus einem elastischen Material gefertigt ist.

Die Montage der Crashbox gestaltet sich gemäß einer anderen vorteilhaften weiterbildung der Erfindung besonders einfach, wenn die verstärkungselemente jeweils zumindest ein Innengewinde aufweisen und wenn Befestigungselemente jeweils eine der Wandungen des Längsträgers durchdringen und in einem der Innengewinde eingedreht sind.

Zur Vereinfachung der Montage der Crashbox an dem Längsträger trägt es gemäß einer anderen vorteilhaften weiterbildung der Erfindung bei, wenn die Crashbox an dem Längsträger abstützende Zentriernasen aufweist.

Die Erfindung lässt verschiedene Ausführungsformen zu. Zur weiteren Verdeutlichung ihres Grundprinzips ist eine davon in der Zeichnung dargestellt und wird nachfolgend beschrieben. Die Zeichnung zeigt in
- Fig. 1: perspektivisch einen in Fahrtrichtung weisenden Teilbereich der erfindungsgemäßen Kraftfahrzeugkarosserie,
- Fig. 2: perspektivisch einen seitlichen Teilbereich der erfindungsgemäßen Kraftfahrzeugkarosserie aus Figur 1,
- Fig. 3a, 3b: Schnittdarstellungen durch einen Einsteckbereich der erfindungsgemäßen Kraftfahrzeugkarosserie aus Figur 2 vor und nach der Montage einer Crashbox,
- Fig. 4a, 4b: Schnittdarstellungen durch den Einsteckbereich einer weiteren Ausführungsform der erfindungsgemäßen Kraftfahrzeugkarosserie vor und nach der Montage der Crashbox,
- Fig. 5a, 5b: Schnittdarstellungen durch den Einsteckbereich einer weiteren Ausführungsform der erfindungsgemäßen Kraftfahrzeugkarosserie vor und nach der Montage der Crashbox,
- Fig. 6a, 6b: Schnittdarstellungen durch den Einsteckbereich einer weiteren Ausführungsform der erfindungsgemäßen Kraftfahrzeugkarosserie vor und nach der Montage der Crashbox,

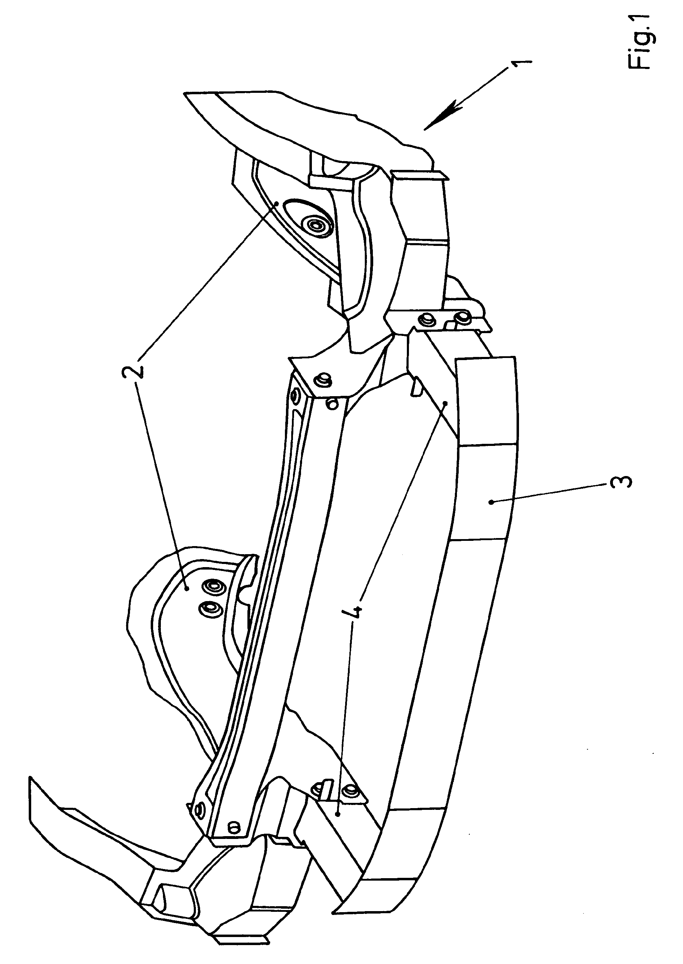

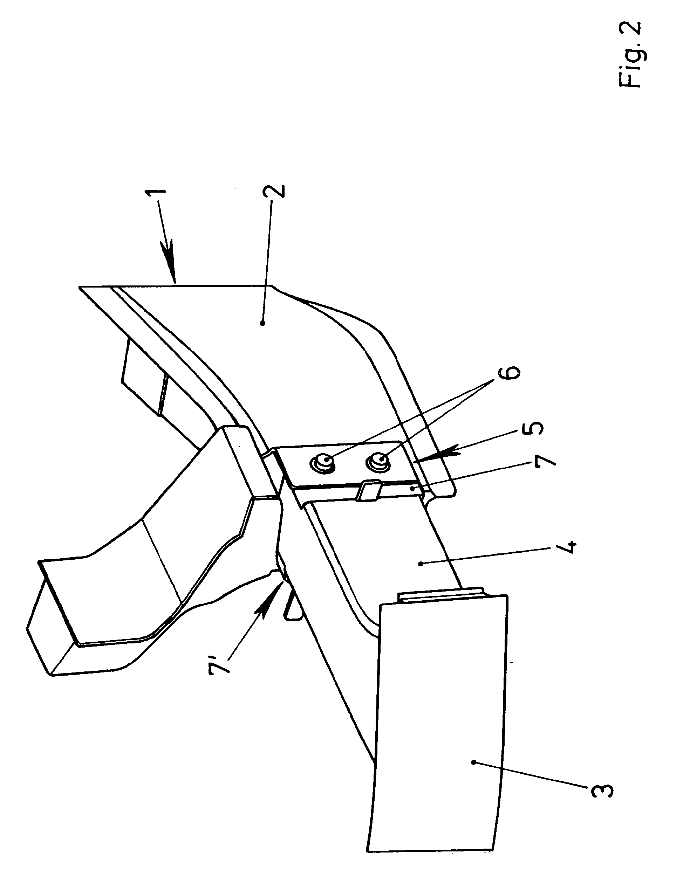

Figur 1 zeigt perspektivisch einen in Fahrtrichtung weisenden Teilbereich einer Kraftfahrzeugkarosserie 1 eines Kraftfahrzeuges mit Längsträgern 2 und mit einem Stoßfängerquerträger 3. Zwischen dem Stoßfängerquerträger 3 und den Längsträgern 2 sind Crashboxen 4 angeordnet. In einer alternativen, nicht dargestellten Ausführungsform können die Längsträger 2 auch an ihrem gegen die Fahrtrichtung weisenden Ende mit Crashboxen versehen sein. Figur 2 zeigt in einer perspektivischen Darstellung auf eine der Crashboxen 4, dass die Crashbox 4 in ein in Fahrtrichtung weisendes Ende des Längsträgers 2 eingeschoben ist. Die Crashbox 4 hat damit einen Einsteckbereich 5, mit dem sie in den Längsträger 2 eingeschoben ist. Die Crashbox 4 ist im Einsteckbereich 5 mittels als Schrauben ausgebildeter Befestigungselemente 6 mit seitlichen, einander gegenüberstehenden Wandungen 7, 7' des Längsträgers 2 verbunden.

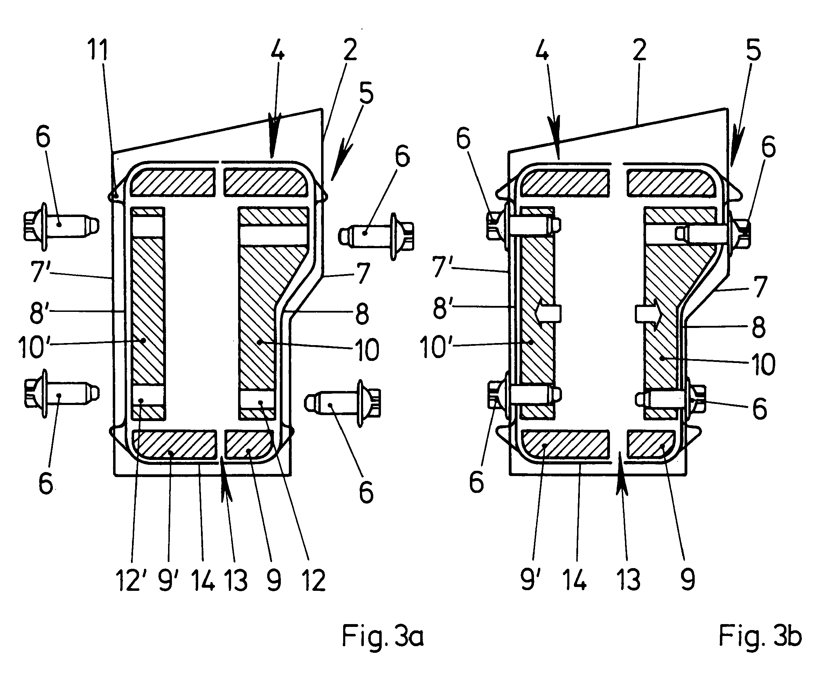

Figur 3a zeigt eine Schnittdarstellung durch den Einsteckbereich 5 der Crashbox 4 in dem Längsträger 2 bei der Montage und vor der Verbindung mit den Befestigungselementen 6. Die Crashbox 4 hat mehrere, in Schalenteilen 8, 8' angeordnete Crashboxteile 9, 9' und zwei Verstärkungselemente 10, 10' und ist in der dargestellten Stellung vor der Montage schmaler als der Abstand der einander gegenüberstehenden Wandungen 7, 7' des Längsträgers 2. Hierdurch werden Toleranzen des Längsträgers 2 und der Crashbox 4 ausgeglichen und ein einfaches Einführen der Crashbox 4 in den Längsträger 2 sichergestellt. Weiterhin hat die Crashbox 4 zur Vereinfachung der Montage sich an dem Längsträger 2 abstützende Zentriernasen 11. Die Verstärkungselemente 10, 10' weisen mehrere Innengewinde 12, 12' für die Befestigungselemente 6 auf. Zur Montage wird die Crashbox 4 in den Längsträger 2 eingeführt, bis die Zentriernasen 11 gegen Längsträger 2 gelangen. Damit sind die Crashbox 4 und der Längsträger 2 zueinander ausgerichtet und die Befestigungselemente 6 können durch Ausnehmungen im Längsträger 2 in die Verstärkungselemente 10, 10' eingedreht werden. Beim Anziehen der als Schrauben ausgebildeten Befestigungselemente 6 wird die Crashbox 4 verformt und mit den verstärkungselementen 10, 10' gegen die Wandungen 7, 7' des Längsträgers 2 gezogen, wie es in Figur 3b dargestellt ist. Die Crashbox 4 hat zur Vereinfachung der Verformung einen Schlitz 13 in einem die Crashboxteile 9, 9' miteinander verbindenden Wandelement 14. Nach der Montage ist die Crashbox 4 kraft- und formschlüssig mit dem Längsträger 2 verbunden.

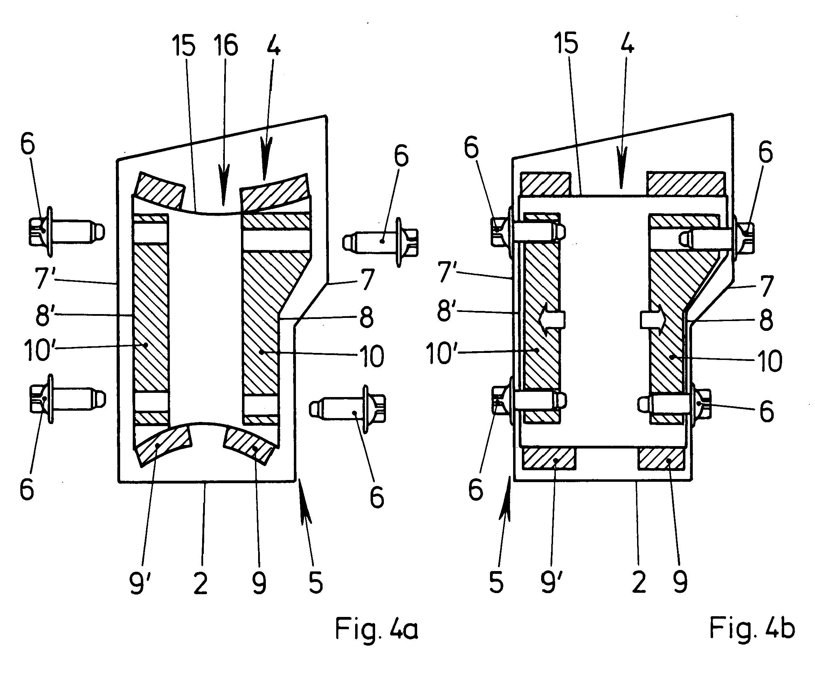

Die Figuren 4a und 4b zeigen schematisch eine weitere Ausführungsform der Kraftfahrzeugkarosserie 1 in einer Schnittdarstellung durch den Einsteckbereich 5 der Crashbox 4 in dem Längsträger 2 bei und nach der Montage. Diese Ausführungsform unterscheidet sich von der aus den Figuren 3a und 3b vor allem dadurch, dass ein die verstärkungselemente 10, 10' verbindendes Wandelement 15 der Crashbox 4 im von dem Längsträger 2 getrennten Zustand eine Wölbung 16 aufweist. Bei der Verschraubung der Crashbox 4 mit dem Längsträger 2 wird eine Zugbelastung in die Wölbung 16 eingeleitet und das Wandelement 15 gestreckt, wie es in Figur 4b dargestellt ist.

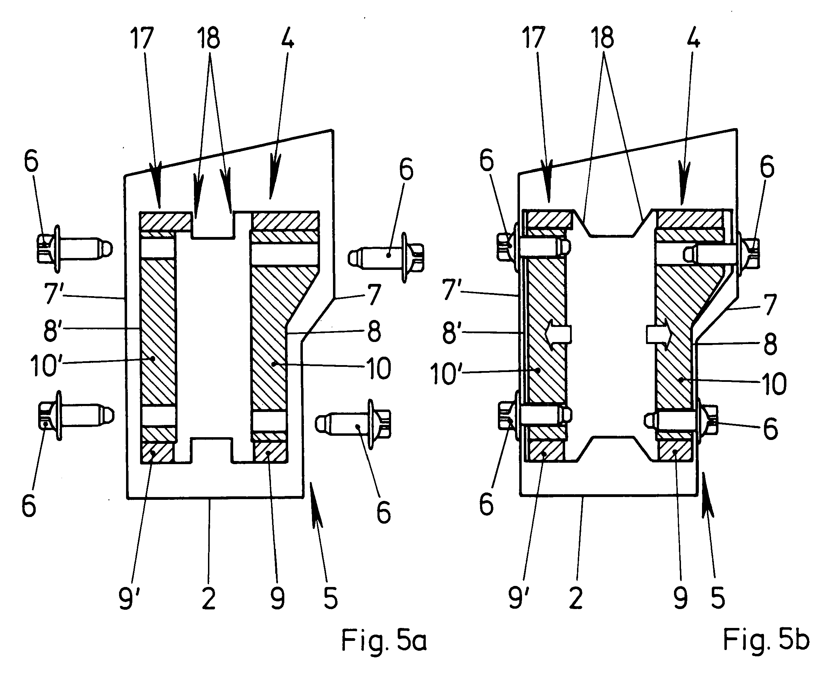

Die Figuren 5a und 5b zeigen ebenfalls schematisch eine weitere Ausführungsform der Kraftfahrzeugkarosserie 1 in einer Schnittdarstellung durch den Einsteckbereich 5 der Crashbox 4 in dem Längsträger 2 bei und nach der Montage. Diese unterscheidet sich von der aus den Figuren 4a und 4b dadurch, dass ein die verstärkungselemente 10, 10' der Crashbox 4 verbindendes Wandelement 17 Verprägungen 18 aufweist. Bei der Montage wird ebenfalls eine zugbelastung in das Wandelement 17 eingeleitet. Die Verprägungen 18 werden aufgebogen, wie es in Figur 5b dargestellt ist, und ermöglichen eine Bewegung und Vorspannung der den Wandungen 7, 7' des Längsträgers 2 gegenüberstehenden Bereiche der Crashbox 4 gegen diese Wandungen 7, 7'.

Die Figuren 6a und 6b zeigen ebenfalls schematisch eine weitere Ausführungsform der Kraftfahrzeugkarosserie 1 in einer Schnittdarstellung durch den Einsteckbereich 5 der Crashbox 4 in dem Längsträger 2 bei und nach der Montage. Hierbei bilden die Schalenteile 8, 8' der Crashbox 4 ein im von dem Längsträger 2 getrennten Zustand überlappendes wandelement 19. Die Schalenteile 8, 8' werden bei der Montage der als Schrauben ausgebildeten Befestigungselemente 6 gegen die Wandungen 7, 7' des Längsträgers 2 vorgespannt.

### Bezugszeichenliste

- 1: Kraftfahrzeugkarosserie
- 2: Längsträger
- 3: Stoßfängerquerträger
- 4: Crashbox
- 5: Einsteckbereich
- 6: Befestigungselement
- 7, 7': Wandung
- 8, 8': Schalenteil
- 9, 9': Crashboxteil
- 10, 10': Verstärkungselement
- 11: Zentriernase
- 12, 12': Innengewinde
- 13: Schlitz
- 14: Wandelement
- 15: Wandelement
- 16: Wölbung
- 17: Wandelement
- 18: Verprägung
- 19: wandelement

## Patentansprüche

1. Kraftfahrzeugkarosserie (1) für ein Kraftfahrzeug mit einem Längsträger (2) und mit einer in einem in oder gegen die Fahrtrichtung weisenden Ende des Längsträgers (2) eingeführten und zwischen zwei gegenüberstehenden Wandungen (7, 7') des Längsträgers (2) befestigten Crashbox (4), **dadurch gekennzeichnet, dass** die Crashbox (4) im von dem Längsträger (2) getrennten Zustand schmaler ist als der Abstand der beiden Wandungen (7, 7') des Längsträgers (2), dass die Crashbox (4) in ihrem in dem Längsträger (2) eindringenden Ende in Richtung der Wandungen (7, 7') des Längsträgers (2) verformbar ist und dass die Crashbox (4) seitlich gegen die Wandungen (7, 7') des Längsträgers (2) vorgespannt ist.

2. Kraftfahrzeugkarosserie nach Anspruch 1, **dadurch gekennzeichnet, dass** die Crashbox (4) zumindest zwei beweglich zueinander angeordnete Crashboxteile (9, 9') aufweist und dass eines der Crashboxteile (9) an der einen Wandung (7) und das andere der Crashboxteile (9') an der gegenüberstehenden Wandung (7') des Längsträges (2) befestigt ist.

3. Kraftfahrzeugkarosserie nach Anspruch 1 oder 2, **dadurch gekennzeichnet, dass** die Crashbox (4) zumindest zwei verstärkungselemente (10, 10') aufweist und dass Befestigungselemente (6) jeweils ein Verstärkungselement (10, 10') mit der nächsten Wandung (7, 7') des Längsträgers (2) verbinden.

4. Kraftfahrzeugkarosserie nach zumindest einem der vorhergehenden Ansprüche, **dadurch gekennzeichnet, dass** jeweils zumindest ein Crashboxteil (9, 9') einem der Verstärkungselemente (10, 10') zugeordnet ist.

5. Kraftfahrzeugkarosserie nach zumindest einem der vorhergehenden Ansprüche, **dadurch gekennzeichnet, dass** die Crashboxteile (9, 9') jeweils mit einem der verstärkungselemente (10, 10') vorfixiert sind.

6. Kraftfahrzeugkarosserie nach zumindest einem der vorhergehenden Ansprüche, **dadurch gekennzeichnet, dass** die Crashboxteile (9, 9') zwischen einem der verstärkungselemente (10, 10') und einer der wandungen (7, 7') des Längsträgers (2) eingespannt sind.

7. Kraftfahrzeugkarosserie nach zumindest einem der vorhergehenden Ansprüche, **dadurch gekennzeichnet, dass** die Crashboxteile (9, 9') oder Schalenteile (8, 8') der Crashbox (4) zumindest außerhalb des Längsträgers (2) über ein wandelement (14, 15, 17, 19) der Crashbox (4) verbunden sind.

8. Kraftfahrzeugkarosserie nach zumindest einem der vorhergehenden Ansprüche, **dadurch gekennzeichnet, dass** das die Crashboxteile (9, 9') verbindende wandelement (14) innerhalb des Längsträgers (2) geschlitzt ist.

9. Kraftfahrzeugkarosserie nach zumindest einem der vorhergehenden Ansprüche, **dadurch gekennzeichnet, dass** die Crashbox (4) zwei Schalenteile (8, 8') zur Aufnahme jeweils eines der Crashboxteile (9, 9') aufweist und dass die Schalenteile (8, 8') ausschließlich außerhalb des Längsträgers (2) miteinander verbunden sind.

10. Kraftfahrzeugkarosserie nach zumindest einem der vorhergehenden Ansprüche, **dadurch gekennzeichnet, dass** das die Crashboxteile (9, 9') oder die Schalenteile (8, 8') verbindende Wandelement (15) der Crashbox (4) im von dem Längsträger (2) getrennten Zustand gewölbt ist.

11. Kraftfahrzeugkarosserie nach zumindest einem der vorhergehenden Ansprüche, **dadurch gekennzeichnet, dass** das die Crashboxteile (9, 9') oder die Schalenteile (8, 8') verbindende Wandelement (17) der Crashbox (4) verformbare Verprägungen (18) aufweist.

12. Kraftfahrzeugkarosserie nach zumindest einem der vorhergehenden Ansprüche, **dadurch gekennzeichnet, dass** das die Crashboxteile (9, 9') oder die Schalenteile (8, 8') verbindende Wandelement (14, 15, 17, 19) aus einem elastischen Material gefertigt ist.

13. Kraftfahrzeugkarosserie nach zumindest einem der vorhergehenden Ansprüche, **dadurch gekennzeichnet, dass** die Verstärkungselemente (10, 10') jeweils zumindest ein Innengewinde (12, 12') aufweisen und dass Befestigungselemente (6) jeweils eine der Wandungen (7, 7') des Längsträgers (2) durchdringen und in einem der Innengewinde (12, 12') eingedreht sind.

14. Kraftfahrzeugkarosserie nach zumindest einem der vorhergehenden Ansprüche, **dadurch gekennzeichnet, dass** die Crashbox (4) sich an dem Längsträger (2) abstützende Zentriernasen (11) aufweist.
